(19) **Europäisches Patentamt / European Patent Office / Office européen des brevets**

(11) **EP 3 146 687 B1**

(12) **FASCICULE DE BREVET EUROPEEN**

(45) Date de publication et mention
de la délivrance du brevet:
**04.07.2018 Bulletin 2018/27**

(21) Numéro de dépôt: **15732783.4**

(22) Date de dépôt: **20.05.2015**

(51) Int Cl.:
**H04L 27/26** $^{(2006.01)}$

(86) Numéro de dépôt international:
**PCT/FR2015/051330**

(87) Numéro de publication internationale:
**WO 2015/177468 (26.11.2015 Gazette 2015/47)**

(54) **PROCEDE DE TRANSMISSION D'UN SIGNAL AVEC PREAMBULE ET DISPOSITIFS CORRESPONDANTS, SIGNAL AVEC PREAMBULE CORRESPONDANT POUR SYNCHRONISATION D'UN RECEPTEUR**

VERFAHREN ZUM SENDEN EINES SIGNALS MIT EINER PRÄAMBEL UND ENTSPRECHENDE VORRICHTUNGEN, SIGNAL MIT ENTSPRECHENDER PRÄAMBEL ZUR SYNCHRONISATION EINES EMPFÄNGERS

METHOD FOR TRANSMITTING A SIGNAL WITH A PREAMBLE AND CORRESPONDING DEVICES, SIGNAL WITH CORRESPONDING PREAMBLE FOR SYNCHRONISATION OF A RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2014 FR 1454555**

(43) Date de publication de la demande:
**29.03.2017 Bulletin 2017/13**

(73) Titulaire: **Orange**
**75015 Paris (FR)**

(72) Inventeurs:
• **LIN, Hao**
**35510 CESSON SEVIGNE (FR)**

• **SIOHAN, Pierre**
**35200 Rennes (FR)**

(56) Documents cités:
**WO-A1-2013/001243    FR-A1- 2 995 749**

• **FUSCO T ET AL: "Data-aided symbol timing and CFO synchronization for filter bank multicarrier systems", IEEE TRANSACTIONS ON WIRELESS COMMUNICATIONS, IEEE SERVICE CENTER, PISCATAWAY, NJ, US, vol. 6, no. 5, 1 mai 2009 (2009-05-01), pages 2705-2715, XP011257595, ISSN: 1536-1276**

**Description**

**Domaine de l'invention**

Le domaine de l'invention est celui de la transmission entre un émetteur et un récepteur de signaux numériques transmis selon un certain format et notamment celui de la synchronisation du récepteur d'un tel signal.

L'invention trouve des applications dans le domaine des télécommunications avec un canal de transmission de type aérien parfois dit radio, mais pas exclusivement. Le canal peut tout aussi bien être de type CPL ou de type fibre optique. Le canal de type fibre optique est dispersif. Le canal CPL, acronymes de Courant Porteur en Ligne (ou selon la terminologie anglo-saxonne Power Line Telecommunication, PLT), induit des effets similaires à ceux rencontrés dans un canal aérien. En particulier, le canal CPL, comme le canal aérien, peut conduire à des trajets multiples lors de la transmission.

Le signal transmis est un signal multi porteuse élaboré à partir d'une succession de symboles multi porteuse eux-mêmes construits suite à un mappage de symboles complexes (constellation) sur les différentes porteuses.

Le multiplexage par répartition orthogonale de la fréquence ou OFDM est une technique de modulation multi-porteuse qui impose une contrainte d'orthogonalité entre les sous-porteuses afin de limiter les interférences entre les porteuses (ou ICI pour Inter Carrier Interference) tout en optimisant l'occupation spectrale. L'OFDM bénéficie par ailleurs de schémas d'implémentation simples et efficaces à base de transformées de Fourier rapides, inverses en émission (IFFT, Inverse Fast Fourier Transform) et directes en réception (FFT, Fast Fourier Transform).

La contrainte d'orthogonalité entre les sous-porteuses est assurée par l'utilisation d'une fonction rectangulaire (fonction porte $\Pi$) de mise en forme du signal multi-porteuse. L'ajout de redondance sous forme d'un préfixe cyclique (CP, Cyclic Prefix) ou d'un intervalle de garde (ex. constitué de zéros) en sortie de la transformée de Fourier rapide inverse permet en outre de limiter les distorsions dues aux interférences introduites par le canal entre les symboles (ISI, Inter Symbol Interference) et entre les porteuses.

L'expression d'un signal OFDM avec préfixe cyclique (signal CP-OFDM) en bande de base et en temps discret $s_{CP-OFDM}[k]$ est donnée, pour M sous-porteuses, à l'instant k (Te=1/Fe), pour une fréquence d'échantillonnage (Fe) normalisée égale à un, par l'équation suivante :

$$s_{CP-OFDM}[k] = \sum_{m=0}^{M-1} \sum_{n=-\infty}^{+\infty} c_{m,n} \prod[k - n(M + L_{CP})] e^{j\frac{2\pi}{M}mk}$$

où $j^2$=-1, $\Pi$ désigne une fonction porte de durée M, $c_{m,n}$ est un symbole complexe (par exemple un symbole d'une modulation QAM (Quadrature Amplitude Modulation)) émis sur la porteuse m à l'instant n, et $L_{CP}$ est la longueur en nombre d'échantillons du préfixe cyclique.

La modulation multi porteuse OFDM/QAM est bien connue et utilisée dans de nombreux systèmes de communication numérique (ADSL, WIFI, etc.) et dans des systèmes de diffusion numérique (DAB, DVB-T, DRM, etc.).

L'ajout d'un préfixe cyclique (ou d'un intervalle de garde) de longueur $L_{CP}$ supérieure à la longueur maximale du canal facilite l'égalisation du canal en évitant les problèmes d'interférences ISI mais entraîne une perte d'efficacité spectrale qui est d'autant plus importante que le préfixe cyclique (ou l'intervalle de garde) est long. En effet, le préfixe cyclique ou l'intervalle de garde introduit ne porte pas d'information utile de manière à garantir que les informations reçues et traitées en réception proviennent d'un même symbole multi-porteuse.

Pour pallier cet inconvénient, il est connu d'utiliser une modulation de type OFDM/OQAM (Orthogonal Frequency Division Multiplexing/Offset Quadrature Amplitude Modulation soit multiplexage par répartition orthogonale de fréquence/modulation d'amplitude quadratique avec décalage). Cette modulation met en oeuvre une décomposition sur deux demi-temps symbole d'un symbole QAM complexe $c_{m,n}$ en une paire de symboles réels constituée de la partie réelle $\mathcal{R}$ ($c_{m,n}$) et de la partie imaginaire $\mathfrak{I}$($c_{m,n}$) du symbole complexe $c_{m,n}$.

Les parties réelle $\mathcal{R}$($c_{m,n}$) et imaginaire $\mathfrak{I}_l$($c_{m,n}$) d'un symbole complexe $c_{m,n}$ à transmettre sont mappées sur une même sous-porteuse m de deux symboles multi-porteuse décalés d'un demi-temps symbole. Le codage OQAM revient à transmettre séparément les parties réelle et imaginaire des constellations QAM en les décalant dans le temps. Cette décomposition en symboles réels permet de relâcher la contrainte d'orthogonalité imposée au système au seul corps des réels ce qui facilite la conception de fonctions orthogonales de mise en forme du signal multi-porteuse (aussi connues sous le nom de fonctions ou filtres prototypes) bien localisées en fréquence et en temps et donne des degrés de liberté pour construire un signal qui soit à la fois bien localisé en temps et bien localisé en fréquence. Cette propriété permet de s'affranchir de l'insertion d'un préfixe cyclique (CP-OFDM) qui a pour fonction de prolonger un symbole multi porteuse et qui a pour inconvénient de consommer de la bande passante.

Le signal OFDM/OQAM sous forme discrète, en bande de base, pour une fréquence d'échantillonnage normalisée égale à un et pour M porteuses, peut s'exprimer sous la forme :

$$s[k] = \sum_{m=0}^{M-1} \sum_{n \in \mathbb{Z}} a_{m,n} g[k - nN] e^{j\frac{2\pi}{M}m\left(k-\frac{D}{2}\right)} e^{j\phi_{m,n}} , \qquad (1)$$

expression dans laquelle *g[k]* est le filtre prototype de longueur *L* avec *D = L* - 1, *k* = 0,..., *M* - 1.

Comme dans la plupart des dispositifs de ce type, le filtre est supposé symétrique et à valeurs réelles. *N = M*/2 est le décalage (offset) en temps discret entre deux symboles OQAM, $\Phi_{m,n}$ est le terme de phase additionnel pour la sous porteuse d'indice m et le symbole OQAM d'indice n, cette phase peut s'exprimer sous la forme $\frac{\pi}{2}(n+m)$. Ce signal transporte les symboles $a_{m,n}$ qui sont à valeurs réelles et qui correspondent aux parties réelles et imaginaires des points de la constellation QAM sur lesquels ont été mappées les données à transmettre, généralement codées, issues d'un signal source.

Un avantage de l'OFDM/OQAM par rapport à la modulation multi-porteuse de référence OFDM/QAM est donc lié à ses propriétés spectrales. Avec une densité spectrale de puissance plus compacte l'OFDM/OQAM s'insère plus facilement dans les bandes de fréquence disponibles ce qui est particulièrement avantageux compte tenu que le spectre est une ressource rare et, le plus souvent, licenciée moyennant une contrepartie financière importante.

De manière plus générale, le signal multi-porteuse considéré dans le cadre de l'invention a la particularité que les symboles de données mappés sur les sous-porteuses sont transmis avec un décalage (offset) temporel égal à la moitié de la durée des symboles multi-porteuse. Le signal multi porteuse OFDM/OQAM, parfois appelé FBMC/OQAM (Filter Bank MultiCarrier/OQAM) est un exemple d'un tel signal.

Les données transmises issues d'un signal source sont formatées sous forme de symboles multi porteuse insérés dans des trames. Une trame débute généralement par un ou plusieurs préambules.

Pour une modulation OFDM/OQAM, le préambule peut s'exprimer sous la forme :

$$P[k] = \sum_{m=0}^{M-1} \sum_{n=0}^{1} p_{m,n} g[k - nN] e^{j\frac{2\pi}{M}m\left(k-\frac{D}{2}\right)} e^{j\phi_{m,n}} , \qquad (2)$$

expression dans laquelle les symboles pilotes $p_{m,n}$ sont mappés sur la m-ième sous-porteuse du n-ième slot. Le préambule étant considéré comme transmis en début de trame sur les deux premiers slots : n=0 et n=1 ; les pilotes sont déterminés pour ces deux slots.

L'invention se place plus particulièrement dans le contexte d'une transmission par salves (burst selon la terminologie anglo-saxonne) comme pour le WiFi. La synchronisation temporelle est réalisée sur la base d'un préambule de symboles placé en début de la salve ou est réalisée de manière répétitive par l'insertion d'un préambule en début de chaque trame de transmission. Selon les applications, une salve peut contenir une ou plusieurs trames en tenant compte de différents critères : la qualité de service (QoS), le débit, la latence, etc...

Ce type de transmission est important pour les transmissions dites M2M (machine To Machine) qui ont par nature un caractère sporadique. Pour ce type de transmission, la synchronisation est de grande importance car toute réémission d'une trame peut coûter cher en dépense énergétique. Ce type de transmission couvre les transmissions par exemple entre réseaux de capteurs, entre réseaux de compteurs.

## Art antérieur

Le récepteur calcule classiquement l'auto corrélation du signal reçu en l'absence de connaissance du préambule et détecte le début de la trame si le résultat de l'auto corrélation franchit un seuil de décision déterminé en l'absence de connaissance de l'instant d'arrivée des échantillons transmis.

Fusco et al [1] décrit une méthode de synchronisation d'un signal OFDM/OQAM. Le préambule *P[k]* est construit avec un premier symbole multi-porteuse (OFDM/OQAM) et un deuxième symbole multi-porteuse décalé d'un demi-temps symbole. Les auteurs proposent de ne transmettre des symboles pilotes non nuls de valeur $\sqrt{2}$ qu'aux sous-porteuses d'indices pairs durant le premier symbole (slot) de symboles OQAM et de ne pas moduler le second slot, i.e. de ne transmettre que des valeurs nulles pour le second symbole :

$$p_{m,0} = \begin{cases} \sqrt{2}, m\ pair \\ 0, m\ impair \end{cases} \qquad (3)$$

$$\text{et } p_{m,1} = \begin{cases} 0, m \text{ pair} \\ 0, m \text{ impair} \end{cases} \tag{4}$$

Ce préambule $P[k]$ ainsi construit par le modulateur possède la symétrie Hermitienne suivante :

$$P[N-1-k] = P^*[N+k], \tag{5}$$

pour $k = 0, ..., N - 1$, où .* est un opérateur conjugué.

Le récepteur peut tirer parti de la propriété de symétrie à des fins de synchronisation. La synchronisation est effectuée par le récepteur en calculant la métrique suivante :

$$R(d) = \sum_{k=0}^{N-1} r[N-1-k+d]r[N+k+d] , \tag{6}$$

à partir des échantillons reçus $r[k]$. Le récepteur détermine l'instant de synchronisation lorsque la puissance de la métrique dépasse un seuil.

Toutefois, la propriété de symétrie n'a de chance d'être préservée en réception que dans le cas d'un canal de type bruit additif, e.g. qui ajoute un bruit blanc Gaussien (AWGN), ce qui exclut le cas de canaux multi-trajets. Ainsi, lors d'une transmission dans un canal multi-trajets, la valeur pic détectée par le module de synchronisation subit une réduction de son énergie ce qui se traduit par une probabilité plus élevée de fausse alarme et/ou de non détection. Or lors d'une transmission par salves la probabilité de non détection est d'une extrême importance lorsqu'il s'agit de respecter des contraintes de QoS ou de latence.

Dandach et al. [2] propose un procédé de synchronisation qui utilise une même structure de préambule que Fusco [1]. La métrique de synchronisation a pour expression :

$$R(d) = \sum_{k=0}^{N/2-1} g[k]g[N-1-k]r[k+d]r[N-1-k+d] \tag{7}$$

La métrique de synchronisation prend en compte la forme du filtre prototype ce qui peut créer une propriété de symétrie additionnelle pour le symbole reçu et réduire la complexité de Fusco [1]. Mais cette propriété ne peut être vérifiée que dans un cas de transmission idéal e.g. un canal Gaussien. En outre, compte tenu que les coefficients du filtre n'ont pas de valeurs uniformes (constantes) alors la métrique calculée à partir des coefficients de faibles valeurs est sensible au bruit ce qui augmente la variance du bruit d'estimation. WO 2013/001243 A1 (FRANCE TELECOM [FR]; DANDACH YOUSSEF [FR]; SIOHAN PIERRE [FR]) 3 janvier 2013 (2013-01-03) divulgue un procédé de transmission d'un signal comprenant des symboles multi-porteuse successifs à M sous-porteuses mis en trame, délimitée par un préambule comprenant un premier symbole multi-porteuse. Il existe donc un besoin pour une méthode de synchronisation plus performante lors d'une transmission par un canal multi-trajets.

## Exposé de l'invention

L'invention propose un procédé de transmission d'un signal comprenant des symboles multi-porteuse successifs à M sous-porteuses mis en trame. La trame est délimitée par un préambule comprenant un premier symbole multi-porteuse $P_0[k]$. Le procédé comprend une construction des symboles multi-porteuse faisant intervenir un mappage sur les sous-porteuses de symboles de données à transmettre, avec $P_0[k] = \sum_{m=0}^{M-1} p_{m,0} g[k] e^{j\frac{2\pi}{M}m\left(k-\frac{D}{2}\right)} e^{j\frac{\pi m}{2}}$, expression dans laquelle $g[k]$ est un filtre prototype de longueur D+1, $p_{m,0}$ sont des symboles pilotes mappés sur la m-ième sous-porteuse du premier symbole d'indice temporel n=0, $N = \frac{M}{2}$ est le décalage en temps avant construction des symboles multi-porteuse entre deux symboles de données successifs mappés sur un même indice de sous-porteuse. Le préambule comprend un deuxième symbole multi-porteuse $P_1[k]$ tel que :

$$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$$ et les symboles pilotes sont tels que :

$$p_{m,0} = \begin{cases} \alpha_m, m \text{ pair} \\ 0, m \text{ impair} \end{cases} \text{ et } p_{m,1} = \begin{cases} p_{m,0}(-j), m \text{ pair} \\ 0, m \text{ impair} \end{cases} \text{ avec } \alpha_m \text{ une variable aléatoire réelle.}$$

L'invention a en outre pour objet un émetteur d'un signal comprenant des symboles multi porteuse successifs à M sous-porteuses mis en trame. La trame est délimitée par un préambule comprenant un premier symbole multi-porteuse $P_0[k]$. L'émetteur comprend un moyen de construction des symboles multi-porteuse faisant intervenir un mappage sur les sous-porteuses de symboles de données à transmettre, avec

$$P_0[k] = \sum_{m=0}^{M-1} p_{m,0} g[k] e^{j\frac{2\pi}{M}m\left(k-\frac{D}{2}\right)} e^{j\frac{\pi m}{2}},$$ expression dans laquelle $g[k]$ est un filtre prototype de longueur D+1, $p_{m,0}$ sont des symboles pilotes mappés sur la m-ième sous-porteuse du premier symbole d'indice temporel n=0, $N = \frac{M}{2}$ est le décalage en temps avant construction des symboles multi-porteuse entre deux symboles de données successifs mappés sur un même indice de sous-porteuse. L'émetteur comprend un module pour déterminer un deuxième symbole multi-porteuse $P_1[k]$ faisant partie du préambule dont l'expression est la suivante:

$$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$$ et pour déterminer les symboles pilotes tels que

$$p_{m,0} = \begin{cases} \alpha_m, m\ pair \\ 0, m\ impair \end{cases} \text{et} \quad p_{m,1} = \begin{cases} p_{m,0}(-j), m\ pair \\ 0, m\ impair \end{cases}$$ avec $\alpha_m$ une variable aléatoire réelle.

Un tel émetteur est notamment apte à mettre en oeuvre le procédé de transmission selon l'invention.

L'invention a en outre pour objet un signal transmis entre un émetteur et un récepteur comprenant des symboles multi porteuse successifs à M sous-porteuses mis en trame. La trame est délimitée par un préambule comprenant un premier symbole multi-porteuse $P_0[k]$. Les symboles multi-porteuse sont issus d'une construction faisant intervenir un mappage sur les sous-porteuses de symboles de données à transmettre, avec

$$P_0[k] = \sum_{m=0}^{M-1} p_{m,0} g[k] e^{j\frac{2\pi}{M}m\left(k-\frac{D}{2}\right)} e^{j\frac{\pi m}{2}},$$ expression dans laquelle $g[k]$ est un filtre prototype de longueur D+1, $p_{m,0}$ sont des symboles pilotes mappés sur la m-ième sous-porteuse du premier symbole d'indice temporel n=0, $N = \frac{M}{2}$ est le décalage en temps avant construction des symboles multi-porteuse entre deux symboles de données successifs mappés sur un même indice de sous-porteuse. Le préambule comprend un deuxième symbole multi-porteuse dont l'expression est la suivante: $$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$$ et les symboles pilotes sont tels que $$p_{m,0} = \begin{cases} \alpha_m, m\ pair \\ 0, m\ impair \end{cases} \text{et } p_{m,1} = \begin{cases} p_{m,0}(-j), m\ pair \\ 0, m\ impair \end{cases}$$ avec $\alpha_m$ une variable aléatoire réelle.

L'invention a en outre pour objet un procédé de synchronisation d'un récepteur recevant un signal comprenant des symboles multi-porteuse successifs à M sous-porteuses mis en trame, la trame étant délimitée par un préambule et les symboles multi-porteuse étant issus d'une construction faisant intervenir un mappage sur les sous-porteuses de symboles de données à transmettre tel que $N = \frac{M}{2}$ est le décalage en temps avant construction des symboles multi-porteuse entre deux symboles de données successifs mappés sur un même indice de sous-porteuse. Le procédé comprend :

- un calcul à des instants $d$ successifs correspondants respectivement à des échantillons $r[k]$ reçus du signal émis d'une métrique de synchronisation dite grossière $R_c(d) = \sum_{k=0}^{N-1} r[k+d] r^*[N+k+d]$, $.^*$ étant un opérateur conjugué,
- une détection du dépassement par la métrique grossière d'un seuil déterminé, dépassement auquel correspond un instant $d_s$ de synchronisation dit grossière.

L'invention a en outre pour objet un récepteur d'un signal comprenant des symboles multi porteuse successifs à M sous-porteuses mis en trame, la trame étant délimitée par un préambule et les symboles multi-porteuse étant issus d'une construction faisant intervenir un mappage sur les sous-porteuses de symboles de données à transmettre tel que $N = \frac{M}{2}$ est le décalage en temps avant construction des symboles multi-porteuse entre deux symboles de données successifs mappés sur un même indice de sous-porteuse. Le récepteur comprend :

- un calculateur pour calculer à des instants $d$ successifs correspondant respectivement à des échantillons $r[k]$ reçus du signal émis une métrique de synchronisation grossière $R_c(d) = \sum_{k=0}^{N-1} r[k+d] r^*[N+k+d]$, $.^*$ étant un opérateur conjugué,
- un moyen de détection du dépassement par la métrique grossière d'un seuil déterminé, dépassement auquel correspond un instant *ds* de synchronisation dit grossière du récepteur.

Un tel récepteur est notamment apte à mettre en oeuvre le procédé de synchronisation selon l'invention.

L'invention repose sur la transmission de symboles multi-porteuse mis en trame délimités par un préambule qui possède la propriété de symétrie hermitienne et en outre la propriété suivante :

$$P[k] = P[N + k], \tag{8}$$

pour $k = 0,..., N - 1$. Cette dernière propriété est particulièrement importante puisqu'elle permet un calcul récursif de la métrique ce qui n'est pas le cas de la métrique de Fusco et al. [1] ni de celle de Dandach [2]. Cette propriété permet une diminution très importante de la complexité de calcul. La complexité résultante pour le calcul de la métrique normalisée selon l'invention est évaluée à quatre multiplications complexes, quatre additions complexes et une division complexe pour chaque valeur de d au-delà du calcul de la première valeur de d alors que la métrique de Fusco et al [1] exprimée sous la forme normalisée :

$$M(d) = \frac{|R(d)|^2}{D(d)^2} \text{ avec } D(d) = \sum_{k=0}^{N-1} |r[N - 1 - k + d]|^2 \tag{9}$$

conduit à une complexité résultante de 2N multiplications complexes, N-1 additions complexes et une division complexe et que la métrique de Dandach et al [2] exprimée sous la forme normalisée :

$$M(d) = \frac{|R(d)|^2}{D(d)^2} \text{ avec } D(d) = \sum_{k=0}^{N/2-1} |g[N - 1 - k]r[k + d]|^2 \tag{10}$$

conduit à une complexité résultante de 3N/2 multiplications complexes, N/2-1 additions complexes et une division complexe.

En prenant pour exemple la norme IEEE 802.11ac pour laquelle la fréquence d'échantillonnage est de 20 MHz, le récepteur doit donc effectuer pour chaque valeur de d, donc toutes les 50 ns, les opérations précédemment listées : quatre multiplications, quatre additions complexes et une division complexe pour la métrique normalisée selon l'invention en comparaison de 2N multiplications complexes, N-1 additions complexes et une division complexe pour la métrique normalisée selon Fusco [1] et de 2N multiplications complexes, N-1 additions complexes et une division complexe pour la métrique normalisée selon Dandach [2]. Pour le standard 3GPP LTE release 8 et suivantes pour lequel la fréquence d'échantillonnage est de 30,72MHz, les calculs précédents doivent être effectués toutes les environ 32 ns.

Une telle diminution de complexité avec un préambule selon l'invention est avantageuse plus particulièrement pour des applications M2M qui s'appuient sur des dispositifs dont la consommation énergétique est très contrainte et donc la puissance de calcul très limitée.

La propriété (8) est préservée même après transmission dans un canal multi-trajets ce qui permet d'améliorer la synchronisation par rapport à l'art antérieur tout en profitant de la diminution de complexité pour accroître la précision des calculs et diminuer par conséquent le taux de fausse alarme et/ou de non détection.

Selon un mode de réalisation particulier, les symboles multi porteuse sont de type OFDM/OQAM.

Dans un mode de réalisation particulier l'émetteur comprend un modulateur OFDM/OQAM et le préambule est alors constitué par exemple de deux symboles OFDM/OQAM.

Un émetteur selon l'invention peut comporter les différentes caractéristiques relatives au procédé de transmission selon l'invention, qui peuvent être combinées ou prises isolément. Ainsi, les caractéristiques et avantages de cet émetteur sont les mêmes que ceux du procédé de transmission.

Un récepteur selon l'invention peut comporter les différentes caractéristiques relatives au procédé de synchronisation selon l'invention, qui peuvent être combinées ou prises isolément. Ainsi, les caractéristiques et avantages de ce récepteur sont les mêmes que ceux du procédé de synchronisation.

**Liste des figures**

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :

- la figure 1 est une illustration du déroulement du procédé de synchronisation selon l'invention selon un mode de réalisation particulier,
- la figure 2a est un schéma d'une structure simplifiée d'un récepteur mettant en oeuvre un procédé de synchronisation, selon l'invention,
- la figure 2b est un schéma d'une structure simplifiée d'un émetteur mettant un oeuvre un procédé de transmission, selon l'invention.
- les figures 3 et 4 représentent des courbes de probabilité de mauvaise détection en fonction de la probabilité de fausse alarme pour deux méthodes connues et un procédé selon l'invention dans un cas de canal Gaussien (AWGN) avec un SNR de respectivement 0 dB et 5 dB,
- les figures 5 et 6 représentent des courbes de probabilité de mauvaise détection en fonction de la probabilité de fausse alarme pour les deux méthodes connues et un procédé selon l'invention dans un cas de canal multi-trajets (MP) avec un SNR de respectivement 0dB et 5dB,
- la figure 7 représente les erreurs en termes de moindre carrés (MSE) pour l'estimation du délai ds pour les deux méthodes connues et un procédé selon l'invention.

**Description de modes de réalisation de l'invention**

L'invention s'applique en particulier à un signal OFDM/OQAM dont l'expression peut se mettre sous la forme (1). Plus généralement l'invention s'applique à un signal comprenant des symboles multi-porteuse successifs à M sous-porteuses issus d'une construction faisant intervenir un mappage sur les sous-porteuses de symboles de données à transmettre tel que $N = \frac{M}{2}$ est le décalage en temps avant construction des symboles multi-porteuse entre deux symboles successifs de données mappés sur un même indice de sous-porteuse.

Le principe général de l'invention repose sur l'utilisation d'un préambule de structure particulière inséré généralement en début de trame. Le préambule a pour expression :

$$P[k] = P_0[k] + P_1[k] \tag{11}$$

avec :

$$P_0[k] = \sum_{m=0}^{M-1} p_{m,0} g[k] e^{j\frac{2\pi}{M}m\left(k-\frac{D}{2}\right)} e^{j\frac{\pi m}{2}} \text{ et} \tag{12}$$

$$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}} \tag{13}$$

expressions dans lesquelles $g[k]$ est un filtre prototype de longueur D+1 et les symboles pilotes $p_{m,n}$ sont tels que :

$$p_{m,0} = \begin{cases} \alpha_m, m \ pair \\ 0, m \ impair \end{cases} \text{ et } p_{m,1} = \begin{cases} p_{m,0}(-j), m \ pair \\ 0, m \ impair \end{cases} \tag{14}$$

avec $\alpha_m$ une variable aléatoire réelle.

L'introduction d'un filtrage circulaire dans la modulation du deuxième symbole permet de créer la propriété de symétrie selon l'expression (8). Le caractère aléatoire de $\alpha_m$ permet d'assurer un niveau faible du facteur de crête i.e. du PAPR (Peak to Average Power Ratio).

Les pilotes sont mappés sur la m-ième sous-porteuse du n-ième slot. Le préambule étant considéré comme transmis en début de trame sur les deux premiers temps symboles (slots) : n=0 et n=1, les pilotes sont déterminés pour ces deux temps symboles (slots).

Un émetteur selon l'invention émet un signal qui correspond à des symboles successifs mis en trame tel que le début de la trame est délimité par un préambule de structure particulière précédemment décrite. Un procédé de transmission selon l'invention transmet un signal qui correspond à des échantillons successifs mis en trame tel que le début de la trame est délimité par un préambule de structure particulière précédemment décrite.

Un récepteur selon l'invention du signal émis calcule au moins une métrique qui exploite la structure particulière du préambule précédemment décrite.

Selon un premier mode de réalisation de la synchronisation du récepteur, l'invention utilise une seule métrique, cette synchronisation est dite grossière. Cette première métrique mesure une corrélation entre séquences successives d'échantillons reçus délimités par une fenêtre glissante. Cette métrique présente un pic lorsque la fenêtre est calée sur le préambule puisque les deux symboles sont fortement corrélés.

Des distorsions sur le signal émis introduites par le canal ou le récepteur lui-même (bruit) peuvent modifier les symboles et introduire un biais sur la corrélation entre ces symboles.

Selon un deuxième mode de réalisation de la synchronisation du récepteur, l'invention utilise deux métriques, la métrique grossière et une deuxième métrique qui permet une synchronisation dite fine. La deuxième métrique identique à la métrique précédente mesure une corrélation sur une fenêtre glissante d'échantillons reçus dont la taille est réduite autour de l'instant de synchronisation grossière.

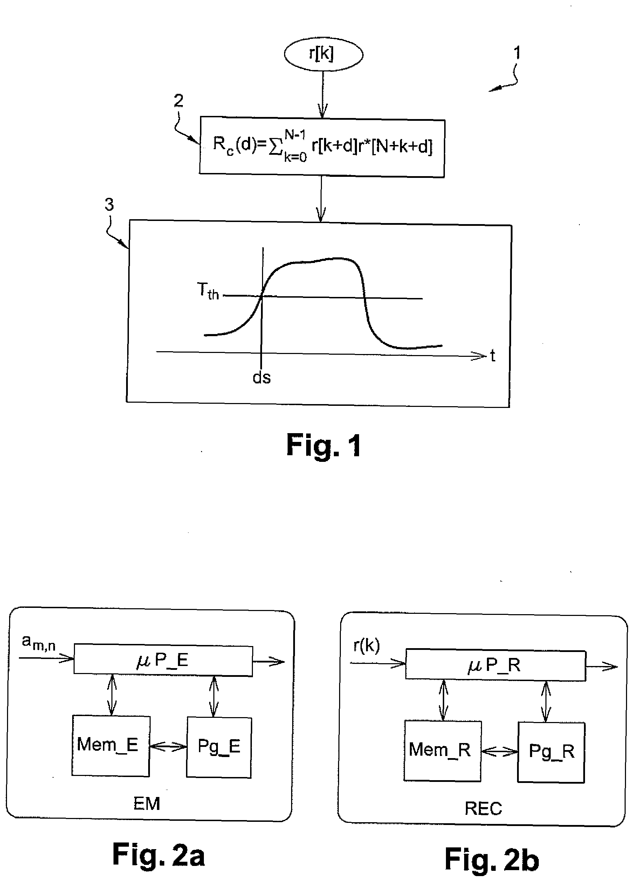

Le procédé de synchronisation selon un mode de réalisation particulier est décrit ci-après et illustré par la figure 1.

$r(k)$ est le signal reçu échantillonné. Le signal reçu correspond au signal émis avec en plus des éventuelles distorsions dues au canal et/ou au bruit.

Le procédé 1 de synchronisation calcule la métrique de synchronisation grossière pour des échantillons $r(k)$ reçus à des instants $d$ successifs. Le calcul 2 de la métrique de synchronisation dite grossière revient à effectuer la somme des corrélations entre deux séquences de N échantillons reçus, elle a pour expression :

$$R_c(d) = \sum_{k=0}^{N-1} r[k+d]r^*[N+k+d] \,, \tag{15}$$

où $(.)^*$ est l'opérateur de conjugaison.

Cette première métrique donne une mesure de la corrélation entre séquences successives de N échantillons reçus. Sans l'impact du canal et du bruit sa valeur est maximale lorsque les séquences successives délimitées par une fenêtre glissante de longueur M=2N correspondent au préambule (11). En effet, son expression est basée sur la corrélation qui existe au sein du préambule d'une part entre les N échantillons du premier symbole et les N échantillons du deuxième symbole.

Selon un mode particulièrement avantageux, le procédé calcule la métrique sous sa forme normalisée.

La sommation qui apparaît dans l'expression de la métrique peut être calculée de manière récursive. C'est-à-dire que la valeur du sommateur à l'instant $(d+1)$ peut être calculée à partir de celle à l'instant $(d)$, ce qui réduit la complexité du procédé de synchronisation et du récepteur.

En effet, à l'instant $(d+1)$, la valeur de la métrique est égale à :

$$R_c(d+1) = \sum_{k=0}^{N-1} r[k+d+1]r^*[N+k+d+1]$$
$$= R_c(d) + r[d+N]r^*[d+2N] - r[d]r^*[d+N] \tag{16}$$

Ainsi, au lieu d'effectuer N additions complexes et N multiplications complexes à chaque instant $d$ pour calculer la métrique, il faut effectuer seulement deux multiplications complexes et deux additions avec un calcul récursif ce qui réduit de manière importante la complexité du récepteur.

De même pour calculer la métrique normalisée :

$$M_c(d+1) = \frac{|R_c(d+1)|^2}{D_c(d+1)^2} \text{ avec } D_c(d+1) = \sum_{k=0}^{N-1} |r[k+d+1]|^2 \tag{17}$$

$$D_c(d+1) = \sum_{k=0}^{N-1} r[k+d+1]r^*[k+d+1]$$
$$= D_c(d) + r[d+N]r^*[d+N] - r[d]r^*[d] \tag{18}$$

Le procédé détermine 3 un instant de synchronisation ds dit grossier lorsque la métrique dépasse un seuil déterminé ce qui revient à détecter la présence de signal reçu. La métrique est comparée avec le seuil déterminé $T_{th}$. La valeur de ce seuil est déterminée selon une probabilité de perte de paquets. Un paquet correspond généralement à une trame délimitée par un ou plusieurs préambules suivis de données (payload selon la terminologie anglo-saxonne). Par exemple pour un SNR de 0 dB, la valeur déterminée du seuil est de 0,8 pour une probabilité de perte de paquets de 4% (la perte concerne une non détection pour tous les paquets envoyés).

Lors de la comparaison, le procédé de synchronisation détecte le dépassement du seuil $T_{th}$. Le dépassement correspond à un instant $ds$ dit instant de synchronisation grossière.

Le procédé de synchronisation selon l'invention est simple, les calculs à effectuer sont soit des opérations d'addition, soit des opérations de multiplication et ce, sur un nombre limité d'échantillons.

Selon le mode de réalisation, le procédé de synchronisation peut compléter la mesure de corrélation entre séquences successives d'échantillons reçus au moyen d'une deuxième métrique identique à la première métrique mais calculée sur un nombre d'échantillons qui peut être réduit et pris dans une fenêtre calée autour de l'instant de synchronisation grossière pour affiner l'instant ds de synchronisation précédemment déterminé.

Selon ce mode, le procédé de synchronisation calcule la métrique de synchronisation à des instants $d$ contenus dans une fenêtre de recherche W de taille $\Delta$ déterminée, commençant à un instant proche de $ds$ : W= [$ds,..., ds+\Delta-1$]. Le procédé détermine la taille $\Delta$ de la fenêtre W en fonction de la probabilité que le début de la trame se trouve dans la fenêtre. Plus la taille $\Delta$ est grande plus la probabilité se rapproche de 1. La valeur maximale de la deuxième métrique correspond au début estimé $\hat{d}$ du préambule, donc de la trame reçue.

La structure simplifiée d'un émetteur mettant un oeuvre un procédé de transmission selon les modes de réalisation décrits ci-dessus est décrite ci-après et illustrée par la figure 2a.

Un tel émetteur EM comprend une mémoire Mem_E comprenant une mémoire tampon, une unité de traitement $\mu$P_E, équipée par exemple d'un microprocesseur et pilotée par le programme d'ordinateur Pg_E mettant en oeuvre le procédé de transmission d'un signal selon l'invention.

A l'initialisation, les instructions de code du programme d'ordinateur Pg_E sont par exemple chargées dans une mémoire RAM avant d'être exécutées par le processeur de l'unité de traitement $\mu$P_E. L'unité de traitement $\mu$P_E reçoit en entrée des données par exemple modulées sous forme de symboles $\alpha_{m,n}$. Le microprocesseur de l'unité de traitement $\mu$P_E met en oeuvre le procédé de transmission décrit précédemment, selon les instructions du programme d'ordinateur Pg_E. Pour cela, l'émetteur comprend des moyens de détermination du préambule $P[k]$ correspondant aux relations (11), (12) et (13). Ces moyens sont pilotés par le microprocesseur et font partie de l'unité de traitement $\mu$P_E.

La structure simplifiée d'un récepteur mettant en oeuvre un procédé de synchronisation selon les modes de réalisation décrits ci-dessus est décrite ci-après et illustrée par la figure 2b.

Un tel récepteur REC comprend une mémoire Mem_R comprenant une mémoire tampon, une unité de traitement $\mu$P_R équipée par exemple d'un microprocesseur et pilotée par un programme d'ordinateur Pg_R mettant en oeuvre le procédé de synchronisation selon l'invention.

A l'initialisation, les instructions de code du programme d'ordinateur Pg_R sont par exemple chargées dans une mémoire RAM avant d'être exécutées par le processeur de l'unité de traitement $\mu$P_R. L'unité de traitement $\mu$P_R reçoit en entrée les échantillons $r(k)$ du signal transmis à travers un canal (par exemple dans une même bande ou par exemple dans plusieurs bandes) qui peut être dispersif (ou multi-trajets par exemple pour un canal aérien). Le microprocesseur de l'unité de traitement $\mu$P_R met en oeuvre le procédé de synchronisation décrit précédemment, selon les instructions du programme d'ordinateur Pg_R. Pour cela, le récepteur comprend un calculateur pour calculer à des instants $d$ successifs correspondants respectivement à des échantillons reçus la métrique de synchronisation grossière ainsi qu'un moyen de détection du dépassement d'un seuil déterminé par la métrique grossière, dépassement auquel correspond un instant $ds$ de synchronisation dit grossier du récepteur. Le récepteur peut en outre comprendre un moyen de détermination d'une fenêtre W de recherche fine à partir de la valeur de synchronisation grossière $ds,$ un calculateur pour calculer à des instants $d$ successifs contenus dans la fenêtre W de recherche fine, la métrique de synchronisation fine, un moyen de détection du maximum de la métrique fine ou du dépassement d'un seuil déterminé par la métrique fine, maximum ou dépassement auquel correspond un instant de synchronisation fine. Ces moyens sont pilotés par le microprocesseur et font partie de l'unité de traitement $\mu$P_R.

Des simulations ont permis de comparer le procédé de synchronisation selon l'invention avec les deux techniques de l'art antérieur, celle de Fusco [1] et celle de Dandach [2]. Les simulations ont été mises en oeuvre avec les paramètres suivants : taille de la FFT égale à 64, longueur du filtre prototype L égale à M, calcul du facteur $\alpha_m$ de manière à ce que la puissance du préambule généré soit la même entre les trois procédés, un premier modèle de canal gaussien (AWGN) et un second modèle de canal multi-trajets (MP) à deux trajets introduisant un retard égal à 25% de la durée symbole multi-porteuse et un gain pour le second trajet inférieur de 20% au gain du premier trajet (principal).

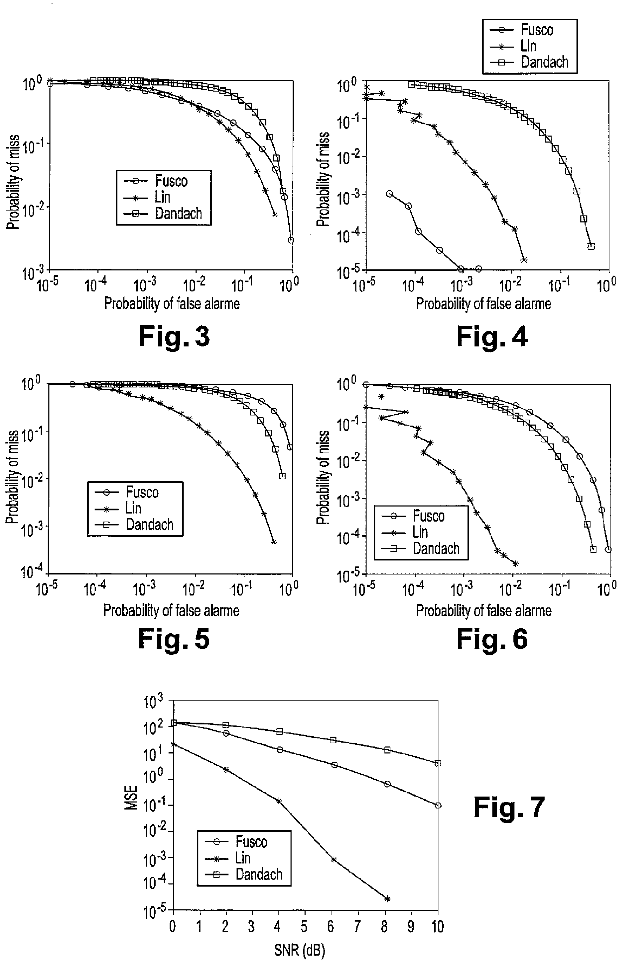

Les figures 3-6 illustrent la probabilité de mauvaise détection en fonction de la probabilité de fausse alarme pour les deux méthodes de l'art antérieur, celle de Fusco [1] et celle de Dandach [2] et pour un procédé selon l'invention Lin. La figure 3 correspond à un SNR de 0dB et un canal de transmission Gaussien (AWGN). La figure 4 correspond à un SNR de 5dB et un canal de transmission Gaussien (AWGN). La figure 5 correspond à un SNR de 0dB et un canal de transmission multi-trajets (MP. La figure 6 correspond à un SNR de 5dB et un canal de transmission multi-trajets (MP).

La comparaison des courbes permet de constater que les probabilités de mauvaise détection et de fausse alarme s'améliorent avec l'augmentation du SNR pour un canal gaussien ou un canal multi-trajets quel que soit le procédé, ce qui est tout à fait normal.

Pour le canal gaussien, quand le SNR croît les meilleures performances sont observées avec le procédé Fusco [1] ce qui est illustré par la figure 4 par rapport à la figure 3. Ceci s'explique par le fait que la propriété (5) de symétrie hermitienne est exactement vérifiée. Pour le procédé Dandach [2], l'introduction des coefficients du filtre prototype dans l'expression (7) de la métrique conduit à un estimateur instable quand la puissance du bruit devient non négligeable ce qui est illustré par les figures 3 et 4 ; la courbe Dandach est moins bonne que les deux autres courbes.

Pour le canal multi-trajets qui correspond à des conditions de mises en oeuvre plus réalistes que le canal gaussien, les meilleures performances sont obtenues avec le procédé selon l'invention. En effet, la propriété (8) reste valable alors que la propriété (5) de symétrie hermitienne n'est plus exactement vérifiée et conduit donc à une puissance du pic de la métrique (6) plus réduite ; le procédé de Fusco [1] ne permet pas de maintenir les mêmes performances qu'avec le canal gaussien. Le procédé selon l'invention conduit donc à une meilleure synchronisation en termes de probabilité de non détection et de probabilité de fausse alarme.

La figure 7 illustre l'erreur en termes de moindre carrés (MSE) d'estimation du délai de synchronisation $\hat{d}$ pour chacune des trois méthodes. L'erreur MSE est calculée selon l'expression :

$$MSE(d) = \frac{1}{N_r} \sum_{i=0}^{N_r-1} \left(d - \hat{d}_i\right)^2, \tag{19}$$

où $N_r$ est le nombre de réalisations de simulation et $\hat{d}_i$ est le délai de synchronisation estimé à la i-ième réalisation.

La comparaison des trois courbes montre que le procédé selon l'invention conduit à une synchronisation plus précise puisque pour un SNR donné l'erreur MSE est la plus petite avec la courbe Lin.

[1] T. Fusco, A. Petrella, and M. Tanda, "A data-aided symbol timing estimation algorithm for OFDM/OQAM systems," in Proc. Intern. Conf. on Communications (ICC), Dresden, Germany, 2009, pp. 1-5.

[2] Y. Dandach and P. Siohan, "Procédé de réception d'un signal multiporteuse de type OQAM, dispositif de réception et programme d'ordinateur correspondants" demande PCT FR2012/051497, déposée le 28 juin 2012.

## Revendications

1. Procédé de transmission d'un signal comprenant des symboles multi-porteuse successifs à M sous-porteuses mis en trame, délimitée par un préambule comprenant un premier symbole multi-porteuse $P_0[k]$, le procédé comprenant une construction des symboles multi-porteuse faisant intervenir un mappage sur les sous-porteuses de symboles de données à transmettre, avec $P_0[k] = \sum_{m=0}^{M-1} p_{m,0} g[k] e^{j\frac{2\pi}{M}m\left(k-\frac{D}{2}\right)} e^{j\frac{\pi m}{2}}$, expression dans laquelle $g[k]$ est un filtre prototype de longueur D+1, $p_{m,0}$ sont des symboles pilotes mappés sur la m-ième sous-porteuse du premier symbole d'indice temporel n=0, $N = \frac{M}{2}$ est le décalage en temps, avant construction des symboles multi-porteuse, entre deux symboles de données successifs mappés sur un même indice de sous-porteuse, **caractérisé en ce que** le préambule comprend un deuxième symbole multi-porteuse dont l'expression est la suivante :

   $P_1[k] = \sum_{m=0}^{M-1} p_{m,1} g[mod(k - N, M)] e^{j\frac{2\pi}{M}m\left(k-\frac{D}{2}\right)} e^{j\frac{\pi(m+1)}{2}}$ et **en ce que** les symboles pilotes sont tels que

   $p_{m,0} = \begin{cases} \alpha_m, m\ pair \\ 0, m\ impair \end{cases}$ et $p_{m,1} = \begin{cases} p_{m,0}(-j), m\ pair \\ 0, m\ impair \end{cases}$ avec $\alpha_m$ une variable aléatoire réelle.

2. Procédé de transmission d'un signal selon la revendication précédente dans lequel les symboles multi-porteuse sont de type OFDM/OQAM.

3. Emetteur (EM) d'un signal comprenant des symboles multi-porteuse successifs à M sous-porteuses mis en trame, délimitée par un préambule comprenant un premier symbole multi-porteuse $P_0[k]$, comprenant un module de construction des symboles multi-porteuse faisant intervenir un mappage sur les sous-porteuses de symboles de données à transmettre, avec $P_0[k] = \sum_{m=0}^{M-1} p_{m,0} g[k] e^{j\frac{2\pi}{M}m\left(k-\frac{D}{2}\right)} e^{j\frac{\pi m}{2}}$, expression dans laquelle $g[k]$ est un filtre prototype de longueur D+1, $p_{m,0}$ sont des symboles pilotes mappés sur la m-ième sous-porteuse du premier symbole d'indice temporel n=0, $N = \frac{M}{2}$ est le décalage en temps avant construction des symboles multi-porteuse, entre deux symboles de données successifs mappés sur un même indice de sous-porteuse, **caractérisé en ce qu'**il comprend :

   - un module pour déterminer un deuxième symbole multi-porteuse $P_1[k]$ faisant partie du préambule dont l'expression est la suivante: $P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$ et pour déterminer les symboles pilotes tels que $p_{m,0} = \begin{cases} \alpha_m, m\ pair \\ 0, m\ impair \end{cases}$ et $p_{m,1} = \begin{cases} p_{m,0}(-j), m\ pair \\ 0, m\ impair \end{cases}$ avec $\alpha_m$ une variable aléatoire réelle.

4. Signal transmis entre un émetteur et un récepteur comprenant des symboles multi-porteuse successifs à M sous-porteuses mis en trame, délimitée par un préambule comprenant un premier symbole multi-porteuse $P_0[k]$, les symboles multi-porteuse étant issus d'une construction faisant intervenir un mappage sur les sous-porteuses de symboles de données à transmettre, avec $P_0[k] = \sum_{m=0}^{M-1} p_{m,0} g[k] e^{j\frac{2\pi}{M}m\left(k-\frac{D}{2}\right)} e^{j\frac{\pi m}{2}}$, expression dans laquelle $g[k]$ est un filtre prototype de longueur D+1, $p_{m,0}$ sont des symboles pilotes mappés sur la m-ième sous-porteuse du premier symbole d'indice temporel n=0, $N = \frac{M}{2}$ est le décalage en temps, avant construction des symboles multi-porteuse, entre deux symboles de données successifs mappés sur un même indice de sous-porteuse, **caractérisé en ce que** le préambule comprend un deuxième symbole multi-porteuse dont l'expression est la suivante:

$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$ et **en ce que** les symboles pilotes sont tels que

$p_{m,0} = \begin{cases} \alpha_m, m\ pair \\ 0, m\ impair \end{cases}$ et $p_{m,1} = \begin{cases} p_{m,0}(-j), m\ pair \\ 0, m\ impair \end{cases}$ avec $\alpha_m$ une variable aléatoire réelle.

**Patentansprüche**

1. Verfahren zum Übertragen eines Signals, das aufeinanderfolgende Mehrfachträgersymbole mit M Unterträgern umfasst, die in einem Rahmen angeordnet sind, der durch eine Präambel definiert ist, die ein erstes Mehrträgersymbol $P_0[k]$ umfasst, wobei das Verfahren eine Konstruktion der Mehrfachträgersymbole umfasst, bei der ein Zuordnen von zu übertragenden Datensymbolen auf die Unterträger eingesetzt wird, mit

$$P_0[k] = \sum_{m=0}^{M-1} p_{m,0} g[k] e^{j\frac{2\pi}{M}m\left(k-\frac{D}{2}\right)} e^{j\frac{\pi m}{2}}$$

, einem Ausdruck, in dem g[k] ein Prototypfilter der Länge D+1 ist, $p_{m,0}$ Pilotsymbole sind, die dem m-ten Unterträger des ersten Symbols des Zeitindexes n=0 zugeordnet sind, N=M/2 der Zeitversatz ist, vor der Konstruktion der Mehrfachträgersymbole, zwischen zwei aufeinanderfolgenden Datensymbolen, die einem gleichen Unterträgerindex zugeordnet sind, **dadurch gekennzeichnet, dass** die Präambel ein zweites Mehrfachträgersymbol mit folgendem Ausdruck aufweist:

$$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$$

und dadurch, dass die Pilotsymbole derart sind, dass gilt :

$$p_{m,0} = \begin{cases} \alpha_m, m\ gerade \\ 0, m\ ungerade \end{cases} und\ p_{m,1} = \begin{cases} p_{m,0}(-j), m\ gerade \\ 0, m\ ungerade \end{cases},$$

wobei $\alpha_m$ eine reelle Zufallsvariable ist.

2. Verfahren zum Übertragen eines Signals nach dem vorhergehenden Anspruch, wobei die Mehrträgersymbole vom OFDM/OQAM-Typ sind.

3. Sender (EM) eines Signals, das aufeinanderfolgende Mehrfachträgersymbole mit M Unterträgern umfasst, die in einem Rahmen angeordnet sind, der durch eine Präambel definiert ist, die ein erstes Mehrträgersymbol $P_0[k]$ umfasst,

umfassend ein Modul zur Konstruktion der Mehrfachträgersymbole, bei der ein Zuordnen von zu übertragenden Datensymbolen auf die Unterträger eingesetzt wird,

$$P_0[k] = \sum_{m=0}^{M-1} p_{m,0} g[k] e^{j\frac{2\pi}{M}m\left(k-\frac{D}{2}\right)} e^{j\frac{\pi m}{2}}$$

, mit einem Ausdruck, in dem $g[k]$ ein Prototypfilter der Länge D+1 ist, $p_{m,0}$ Pilotsymbole sind, die dem m-ten Unterträger des ersten Symbols des Zeitindexes n=0 zugeordnet sind, N=M/2 der Zeitversatz ist, vor der Konstruktion der Mehrfachträgersymbole, zwischen zwei aufeinanderfolgenden Datensymbolen, die einem gleichen Unterträgerindex zugeordnet sind, **dadurch gekennzeichnet, dass** er umfasst:

- ein Modul zum Bestimmen eines zweiten Mehrträgersymbols $P_1[k]$, das Teil der Präambel ist, dessen Ausdruck folgender ist:

$$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$$

und zum Bestimmen der Pilotsymbole derart, dass gilt:

$$p_{m,0} = \begin{cases} \alpha_m, m\,gerade \\ 0, m\,ungerade \end{cases} und\, p_{m,1} = \begin{cases} p_{m,0}(-j), m\,gerade \\ 0, m\,ungerade \end{cases},$$

wobei $\alpha_m$ eine reelle Zufallsvariable ist.

4. Signal, das zwischen einem Sender und einem Empfänger übertragen wird, das aufeinanderfolgende Mehrfachträgersymbole mit M Unterträgern umfasst, die in einem Rahmen angeordnet sind, der durch eine Präambel definiert ist, die ein erstes Mehrträgersymbol $P_0[k]$ umfasst, wobei die Mehrfachträgersymbole aus einer Konstruktion stammen, bei der ein Zuordnen von zu übertragenden Datensymbolen auf die Unterträger eingesetzt wird, mit

$$P_0[k] = \sum_{m=0}^{M-1} p_{m,0} g[k] e^{j\frac{2\pi}{M}m\left(k-\frac{D}{2}\right)} e^{j\frac{\pi m}{2}}$$

, einem Ausdruck, in dem $g[k]$ ein Prototypfilter der Länge D+1 ist, $p_{m,0}$ Pilotsymbole sind, die dem m-ten Unterträger des ersten Symbols des Zeitindexes n=0 zugeordnet sind, N=M/2 der Zeitversatz ist, vor der Konstruktion der Mehrfachträgersymbole, zwischen zwei aufeinanderfolgenden Datensymbolen, die einem gleichen Unterträgerindex zugeordnet sind, **dadurch gekennzeichnet, dass** die Präambel ein zweites Mehrfachträgersymbol mit folgendem Ausdruck aufweist:

$$P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$$

und dadurch, dass die Pilotsymbole derart sind, dass gilt:

$$p_{m,0} = \begin{cases} \alpha_m, m\,gerade \\ 0, m\,ungerade \end{cases} und\, p_{m,1} = \begin{cases} p_{m,0}(-j), m\,gerade \\ 0, m\,ungerade \end{cases},$$

wobei $\alpha_m$ eine reelle Zufallsvariable ist.

## Claims

1. Method for transmitting a signal comprising framed consecutive multicarrier symbols with M sub-carriers, delimited by a preamble comprising a first multicarrier symbol $P_0[k]$, the method comprising construction of the multicarrier symbols involving mapping onto the sub-carriers of data symbols to be transmitted, where $P_0[k]$

$$= \sum_{m=0}^{M-1} p_{m,0} g[k] e^{j\frac{2\pi}{M}m\left(k-\frac{D}{2}\right)} e^{j\frac{\pi m}{2}}$$ , in which expression $g[k]$ is a prototype filter of length D+1, $p_{m,0}$ are pilot symbols mapped onto the mth sub-carrier of the first symbol of temporal index n = 0, N = M/2 is the time offset, before construction of the multicarrier symbols, between two consecutive data symbols mapped onto one and the same sub-carrier index, **characterized in that** the preamble comprises a second multicarrier symbol whose expression is as follows: $P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$ , and **in that** the pilot symbols are such that $p_{m,0} = \begin{cases} \alpha_m, m \ even \\ 0, m \ odd \end{cases}$ and $p_{m,1} = \begin{cases} p_{m,0}(-j), m \ even \\ 0, m \ odd \end{cases}$ , where $\alpha_m$ is a real random variable.

2. Method for transmitting a signal according to the preceding claim, wherein the multicarrier symbols are of OFDM/OQAM type.

3. Transmitter (EM) of a signal comprising framed consecutive multicarrier symbols with M sub-carriers, delimited by a preamble comprising a first multicarrier symbol $P_0[k]$, comprising a module for construction of the multicarrier symbols involving mapping onto the sub-carriers of data symbols to be transmitted, where

$$P_0[k] = \sum_{m=0}^{M-1} p_{m,0} g[k] e^{j\frac{2\pi}{M}m\left(k-\frac{D}{2}\right)} e^{j\frac{\pi m}{2}}$$ , $P_0[k]$ in which expression $g[k]$ is a prototype filter of length D+1, $p_{m,0}$ are pilot symbols mapped onto the mth sub-carrier of the first symbol of temporal index n = 0, N = M/2 is the time offset, before construction of the multicarrier symbols, between two consecutive data symbols mapped onto one and the same sub-carrier index, **characterized in that** it comprises:

   - a module for determining a second multicarrier symbol $P_1[k]$ forming part of the preamble whose expression is as follows: $P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$ , and for determining the pilot symbols such that $p_{m,0} = \begin{cases} \alpha_m, m \ even \\ 0, m \ odd \end{cases}$ and $p_{m,1} = \begin{cases} p_{m,0}(-j), m \ even \\ 0, m \ odd \end{cases}$ , where $\alpha_m$ is a real random variable.

4. Signal transmitted between a transmitter and a receiver, comprising framed consecutive multicarrier symbols with M sub-carriers, delimited by a preamble comprising a first multicarrier symbol $P_0[k]$, the multicarrier symbols resulting from a construction involving mapping onto the sub-carriers of data symbols to be transmitted, where $P_0[k] = \sum_{m=0}^{M-1} p_{m,0} g[k] e^{j\frac{2\pi}{M}m\left(k-\frac{D}{2}\right)} e^{j\frac{\pi m}{2}}$ , in which expression $g[k]$ is a prototype filter of length D+1, $p_{m,0}$ are pilot symbols mapped onto the mth sub-carrier of the first symbol of temporal index n = 0, N = M/2 is the time offset, before construction of the multicarrier symbols, between two consecutive data symbols mapped onto one and the same sub-carrier index, **characterized in that** the preamble comprises a second multicarrier symbol whose expression is as follows: $P_1[k] = \sum_{m=0}^{M-1} p_{m,1} g[mod(k-N,M)] e^{j\frac{2\pi}{M}m\left(k-\frac{D}{2}\right)} e^{j\frac{\pi(m+1)}{2}}$ , and **in that** the pilot symbols are such that $p_{m,0} = \begin{cases} \alpha_m, m \ even \\ 0, m \ odd \end{cases}$ and $p_{m,1} = \begin{cases} p_{m,0}(-j), m \ even \\ 0, m \ odd \end{cases}$ , , where $\alpha_m$ is a real random variable.

$$r[k]$$

$$R_c(d) = \sum_{k=0}^{N-1} r[k+d]r^*[N+k+d]$$

$T_{th}$

ds

t

**Fig. 1**

$a_{m,n}$

$\mu P\_E$

Mem_E

Pg_E

EM

**Fig. 2a**

$r(k)$

$\mu P\_R$

Mem_R

Pg_R

REC

**Fig. 2b**

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013001243 A1

- FR 2012051497 W

**Littérature non-brevet citée dans la description**

- **T. FUSCO ; A. PETRELLA ; M. TANDA.** A data-aided symbol timing estimation algorithm for OFDM/OQAM systems. *Proc. Intern. Conf. on Communications (ICC),* 2009, 1-5